# EUROPEAN PATENT APPLICATION

(11) **EP 4 610 951 A1**
(43) Date of publication of application: **03.09.2025**
(21) Application number: 25151981.5
(22) Date of filing: 15.01.2025
(51) Int. Cl.: G07C 9/00, B60R 25/24, E05F 15/46, B60J 5/00

(54) **VEHICLE, AND METHOD FOR CONTROLLING VEHICLE**

(30) Priority: 28.02.2024 JP 2024028601
(71) Applicant: TOYOTA JIDOSHA KABUSHIKI KAISHA, Aichi-ken, 471-8571 (JP)
(72) Inventor: TSUZUKI, Kuniharu, Toyota-shi, 471-8571 (JP); FUKE, Jumpei, Toyota-shi, 471-8571 (JP)
(74) Representative: J A Kemp LLP

(57) **Abstract**

A vehicle includes a position detector configured to detect where a vehicle key is located, and a controller. The controller is configured to initiate a first control mode that includes closing a door of the vehicle if a deferred closure request for closing the door is acquired and the position detector detects that the vehicle key is located a specified distance or greater away from the vehicle. Further, the controller is configured to initiate a second control mode that differs from the first control mode and includes closing the door if the deferred closure request is acquired and the position detector does not detect where the vehicle key is located for a predetermined specified period.

## Description

### CROSS-REFERENCE TO RELATED APPLICATIONS

This application is based upon and claims the benefit of priority from prior Japanese Patent Application No. 2024-028601, filed on February 28, 2024, the entire contents of which are incorporated herein by reference.

### BACKGROUND

### 1. Field

The present disclosure is related to a vehicle, and a method for controlling a vehicle.

### 2. Description of Related Art

Japanese Laid-Out Patent Publication No. 2016-037792 describes a communication system including a vehicle and a vehicle key, which is configured to establish communication with the vehicle. The vehicle includes a controller that closes a door of the vehicle when the vehicle key is located a specified distance or greater away from the vehicle.

In a vehicle such as that disclosed in the above publication, if the vehicle key cannot be located when the door is open, the controller will leave the vehicle door open.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a vehicle includes a position detector configured to detect where a vehicle key is located, and a controller. The controller is configured to initiate a first control mode that includes closing a door of the vehicle if a deferred closure request for closing the door is acquired and the vehicle key is located a specified distance or greater away from the vehicle. The controller is configured to initiate a second control mode that differs from the first control mode and includes closing the door if the deferred closure request is acquired and the position detector does not detect where the vehicle key is located for a predetermined specified period.

In another general aspect, a control system for a vehicle includes a position detector configured to detect where a vehicle key is located, and a controller. The controller is configured to initiate a first control mode that includes closing a door of the vehicle if a deferred closure request for closing the door is acquired and the vehicle key is located a specified distance or greater away from the vehicle. Further, the controller is configured to initiate a second control mode that differs from the first control mode and includes closing the door if the deferred closure request is acquired and the position detector does not detect where the vehicle key is located for a predetermined specified period.

In a further general aspect, a method for controlling a vehicle executed by a control system. The method includes detecting where a vehicle key is located, initiating a first control mode that includes closing a door of the vehicle if a deferred closure request for closing the door is acquired and the vehicle key is located a specified distance or greater away from the vehicle, and initiating a second control mode that differs from the first control mode and includes closing the door if the deferred closure request is acquired and location of the vehicle key is not detected for a predetermined specified period.

Other features and aspects will be apparent from the following detailed description, the drawings, and the claims.

### BRIEF DESCRIPTION OF THE DRAWINGS

Fig. 1 is a schematic diagram of a communication system.
Fig. 2 is a flowchart illustrating a series of processes executed to start closing a door when a deferred closure request is acquired.
Fig. 3 is a flowchart illustrating in detail a process for determining an interrupt condition.
Fig. 4 is a flowchart illustrating a first control mode in detail.
Fig. 5 is a flowchart illustrating a second control mode in detail.
Fig. 6 is a diagram illustrating a situation in which a deferred closure state is being set.
Fig. 7 is a diagram illustrating a situation in which a vehicle key is located in a first area.
Fig. 8 is a diagram illustrating a situation in which the vehicle key is located in a second area.
Fig. 9 is a diagram illustrating a situation in which the location of the vehicle key cannot be detected.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### Embodiment

One embodiment of a vehicle, a communication system, a controller for a vehicle, and a method for controlling a vehicle will now be described with reference to the drawings.

### Outline of Communication System

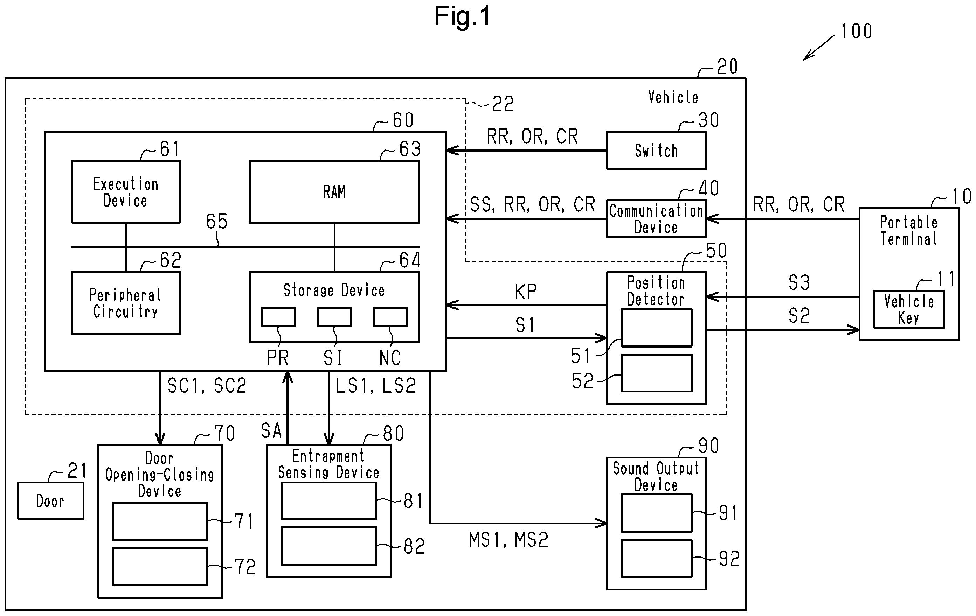

As shown in Fig. 1, a communication system 100 includes a portable terminal 10 and a vehicle 20 that has a door 21. The door 21 is, for example, a back door of the vehicle 20. The door 21 can be opened and closed manually and automatically.

The portable terminal 10 is configured to establish wireless communication with the vehicle 20. The portable terminal 10 performs near field communication in accordance with the Bluetooth Low Energy (BLE) communication standard and wireless communication that uses the ultra-wide band (UWB) to establish wireless communication with the vehicle 20.

The portable terminal 10 includes a vehicle key 11 of the vehicle 20. The portable terminal 10 stores electronic information of the vehicle key 11. In other words, the vehicle key 11 is a digital key. Thus, in the present embodiment, the vehicle key 11 is integrated with the portable terminal 10.

The portable terminal 10 is operated to send a deferred closure request RR for closing the door 21 to the vehicle 20. The deferred closure request RR, as will be described later, is a request for closing the door 21 when a key position KP, which is where the vehicle key 11 is located, is a specified distance away from the vehicle 20. The portable terminal 10 can also output a request to have the door 21 closed regardless of the key position KP. Further, the portable terminal 10, when operated, transmits an open request OR to the vehicle 20 for opening the door 21. When the door 21 is closing, if the portable terminal 10 is operated, the portable terminal 10 will transmit an interrupt request CR to the vehicle 20 to stop closing the door 21. The interrupt request CR is a request for interrupting the closing action of the door 21 so that the door 21 will not close.

The vehicle 20 includes a switch 30, which acts as a first acquisition unit or a first acquisition device, a communication device 40, which acts as a second acquisition unit or a second acquisition device, a position detector 50, which acts as a detector, and a controller 60. The position detector 50 and the controller 60 form a control system 22.

The switch 30 is arranged on the vehicle 20 near the opening for the door 21. In a state in which the door 21 is open, the switch 30 acquires the deferred closure request RR when operated. The switch 30 outputs the acquired deferred closure request RR to the controller 60. The switch 30 can output a request for having the door 21 closed regardless of the key position KP.

In a state in which the door 21 is closed, when the switch 30 is operated, the switch 30 acquires the open request OR. The switch 30 outputs the acquired open request OR to the controller 60. When the door 21 is closing, the switch 30 acquires the interrupt request CR when operated. The switch 30 outputs the acquired interrupt request CR to the controller 60.

The communication device 40 is configured to establish wireless communication with the portable terminal 10. The communication device 40 performs near field communication in accordance with the BLE communication standard. The communication device 40 acquires the deferred closure request RR when receiving the deferred closure request RR from the portable terminal 10. The communication device 40 outputs the acquired deferred closure request RR to the controller 60. The communication device 40 also acquires the open request OR when receiving the open request OR from the portable terminal 10. The communication device 40 outputs the open request OR, which is acquired from the portable terminal 10, to the controller 60. Further, the communication device 40 acquires the interrupt request CR when receiving the interrupt request CR from the portable terminal 10. The communication device 40 outputs the interrupt request CR, which is acquired from the portable terminal 10, to the controller 60. The communication device 40 calculates the strength of a BLE signal received from the portable terminal 10. The strength of the calculated BLE signal becomes greater as the distance between the portable terminal 10 and the communication device 40 becomes shorter. The communication device 40 outputs the calculated strength to the controller 60 as the signal strength SS of the BLE signal.

The position detector 50 acquires an initiation signal S1 for initiating detection of where the vehicle key 11 is located, namely, the key position KP, from the controller 60. Upon acquisition of the initiation signal S1, the position detector 50 executes position detection control for detecting the key position KP in predetermined cycles.

The position detector 50 includes an antenna unit 51 and a control unit 52, which controls the antenna unit 51. The antenna unit 51 includes antennas configured to receive and transmit UWB wireless signals. The control unit 52 controls the transmission and reception of signals in the antenna unit 51. The control unit 52 performs the position detection control on the portable terminal 10 using the UWB wireless signals transmitted from and received by the antenna unit 51. During the position detection control, the control unit 52 detects the distance between the portable terminal 10 and the antenna unit 51 and also detects the angle of the portable terminal 10 relative to the antenna unit 51. For example, the control unit 52 measures the pulse propagation time of a test signal S2 transmitted from the antenna unit 51 to the portable terminal 10 and also measures the pulse propagation time of a test signal S3 transmitted from the portable terminal 10 to the antenna unit 51 in response to the test signal S2. Further, the control unit 52 calculates the distance by multiplying the sum of the measured pulse propagation times by the speed of light. Then, as the antennas of the antenna unit 51 receive the test signal S3 from the portable terminal 10, the control unit 52 calculates the angle from the phase difference of radio waves between the antennas. Based on the calculated distance and angle, the control unit 52 determines the key position KP which is the position of the vehicle key 11 relative to the vehicle 20. The position detector 50 outputs information indicating the detected key position KP to the controller 60. The position detection control ends when the position detector 50 does not acquire the initiation signal S1 for a predetermined period or longer.

The vehicle 20 includes a door opening-closing device 70, which opens and closes the door 21, the entrapment sensing device 80, which is an entrapment sensing unit, and a sound output device 90. The door opening-closing device 70 includes a motor 71, which is an actuator that opens and closes the door 21, and a control unit 72, which controls the motor 71. The control unit 72 drives the motor 71 to generate rotation in a first direction in order to open the door 21. Further, the control unit 72 drives the motor 71 to generate rotation in a second direction, which is opposite the first direction, in order to close the door 21. The control unit 72 interrupts rotation of the motor 71 when the door 21 is closing to interrupt the closing action of the door 21.

The entrapment sensing device 80 detects an object trapped by the door 21 when the door 21 is closing from an open state. The entrapment sensing device 80 includes a sensor 81 and a control unit 82, which controls the sensor 81. The sensor 81 detects the load applied to the motor 71. The control unit 82 uses the detection result of the sensor 81 to execute entrapment detection control. In the entrapment detection control, the control unit 82 compares the load detected by the sensor 81 with a set threshold value in predetermined cycles. When the load detected by the sensor 81 exceeds the set threshold value, the control unit 82 detects an object trapped by the door 21. Upon detection of a trapped object, the entrapment sensing device 80 outputs a detection signal SA, which indicates the detection of a trapped object, to the controller 60.

The sound output device 90 includes a speaker 91 and a control unit 92, which controls the speaker 91. The speaker 91 is driven by the control unit 92 to output a set sound outside the vehicle 20. The control unit 92 drives the speaker 91 to output sound.

The controller 60 controls the door opening-closing device 70, the entrapment sensing device 80, and the sound output device 90 to execute control including the closing of the door 21. The controller 60 acquires the deferred closure request RR from the switch 30. The controller 60 acquires the open request OR from the switch 30. The controller 60 acquires the interrupt request CR from the switch 30.

The controller 60 acquires the deferred closure request RR from the communication device 40. The controller 60 acquires the open request OR from the communication device 40. The controller 60 acquires the interrupt request CR from the communication device 40. The controller 60 acquires the signal strength SS of the BLE signal from the communication device 40.

When the signal strength SS of the BLE signal, which is acquired from the communication device 40, is greater than or equal to a predetermined specified strength, the controller 60 outputs the initiation signal S1 to the position detector 50. The specific strength is, for example, set in advance through experiments and simulations as the signal strength SS of the BLE signal that can be measured within a distance range with a UWB signal. The controller 60 acquires information indicating the key position KP from the position detector 50.

The controller 60 includes a CPU acting as an execution device 61, peripheral circuitry 62, a RAM 63, a storage device 64, and a bus 65. The bus 65 connects the execution device 61, the peripheral circuitry 62, the RAM 63, and the storage device 64 in a manner allowing for communication with one another. The execution device 61, which acts as processing circuitry, executes various programs stored in the storage device 64 to process information. The peripheral circuitry 62 includes a circuit that generates a clock signal for coordinating internal operations, a power supply circuit, a reset circuit, and the like. The RAM 63 store data when the execution device 61 executes a program. The storage device 64 stores a control program PR executed by the execution device 61 to control the door 21. The storage device 64 stores setting information SI, which includes a set value for when the door 21 is closed in a first control mode MD1 and a set value for when the door 21 is closed in the second control mode MD2. The storage device 64 includes a non-detection counter NC. The non-detection counter NC stores the number of consecutive instances in which the execution device 61 determines that the key position KP has not been detected.

Series of processes including closing of door that are executed when deferred closure request is acquired

When the controller 60 acquires the deferred closure request RR, the execution device 61 starts executing the control program PR. More specifically, when the controller 60 acquires the deferred closure request RR from the switch 30 or when the controller 60 acquires the deferred closure request RR from the communication device 40, the execution device 61 starts executing the control program PR.

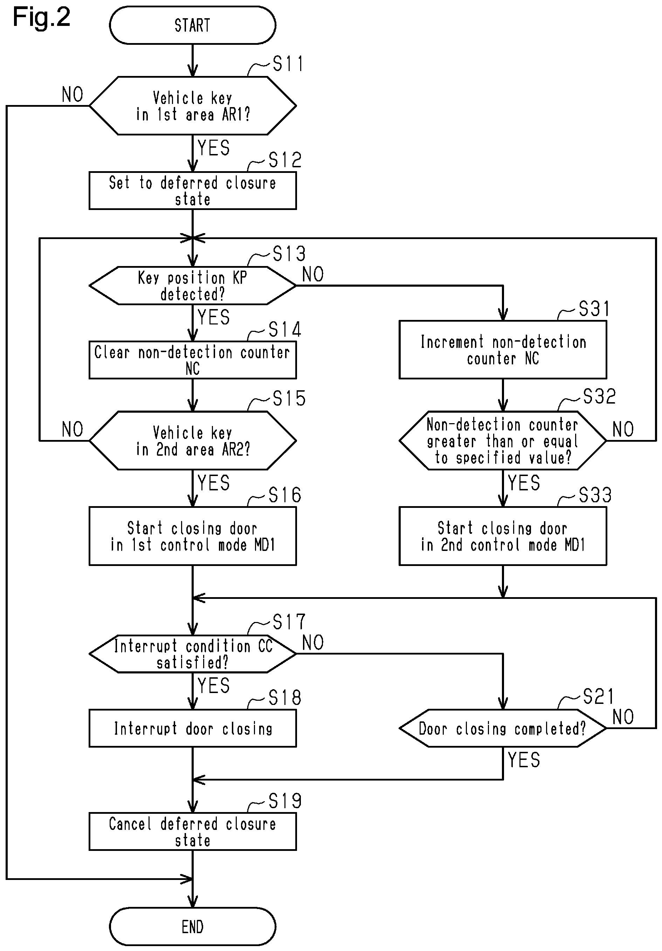

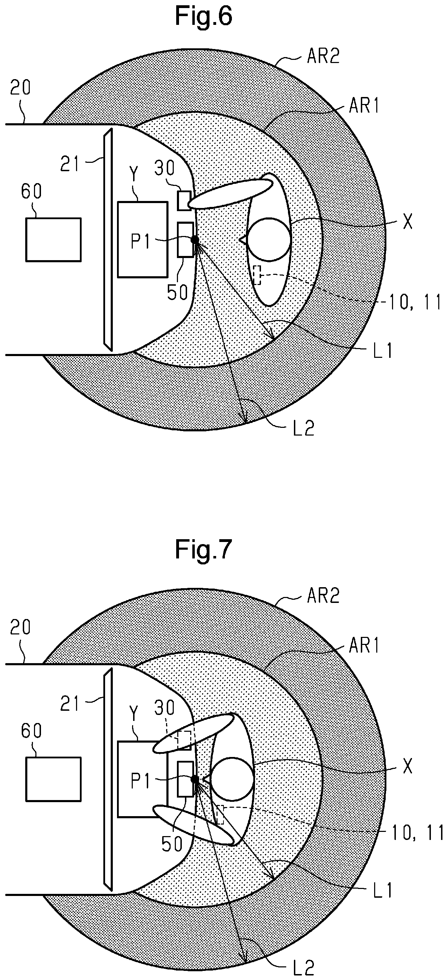

As shown in Fig. 2, when starting execution of the control program PR, the execution device 61 first performs step S11. In step S11, the execution device 61 determines whether the vehicle key 11 is located in a predetermined first area AR1. As shown in Fig. 6, the first area AR1, which is determined in advance through experiments and simulations, is an area within a range in which the distance from a reference point P1, which is set at the position of the antenna unit 51 in the door 21 of the vehicle 20, is less than a predetermined first specified distance L1. The first specified distance L1 is, for example, a sufficient distance from the door 21 and is determined in advance through experiments and simulations.

The execution device 61 compares the key position KP, which is acquired by the controller 60, with the first area AR1, and determines that the vehicle key 11 is located in the first area AR1 when the key position KP is included in the first area AR1.

As shown in Fig. 2, when the execution device 61 determines that the vehicle key 11 is not located in the first area AR1 (S11: NO), the execution device 61 ends the series of processes in the present cycle. When the execution device 61 determines that the vehicle key 11 is located in the first area AR1 (S11: YES), the execution device 61 proceeds to step S12.

In step S12, the execution device 61 sets the control state of the door 21 to a deferred closure state in accordance with the deferred closure request RR. In the deferred closure state, the execution device 61 starts closing the door 21 when a predetermined execution condition is satisfied in the first control mode MD1 or the second control mode MD2, which will be described later. Then, the execution device 61 proceeds to step S13.

In step S13, the execution device 61 determines whether the key position KP has been detected. More specifically, if the controller 60 acquires information indicating the key position KP from the position detector 50 within a predetermined wait period from when step S13 is started, the execution device 61 determines that the key position KP has been detected. When the controller 60 does not acquire information indicating the key position KP from the position detector 50 within a predetermined wait period from when step S13 is started, the execution device 61 determines that the key position KP has not been detected. The wait period is set as, for example, the period of the cycle during which the position detector 50 is activated to detect the key position KP.

When determining that the key position KP has been detected (S13: YES), the execution device 61 proceeds to step S14. In step S14, the execution device 61 clears the value of the non-detection counter NC of the storage device 64. The non-detection counter NC counts the number of consecutive instances in which the execution device 61 gives a negative determination in step S13. Then, the execution device 61 proceeds to step S15.

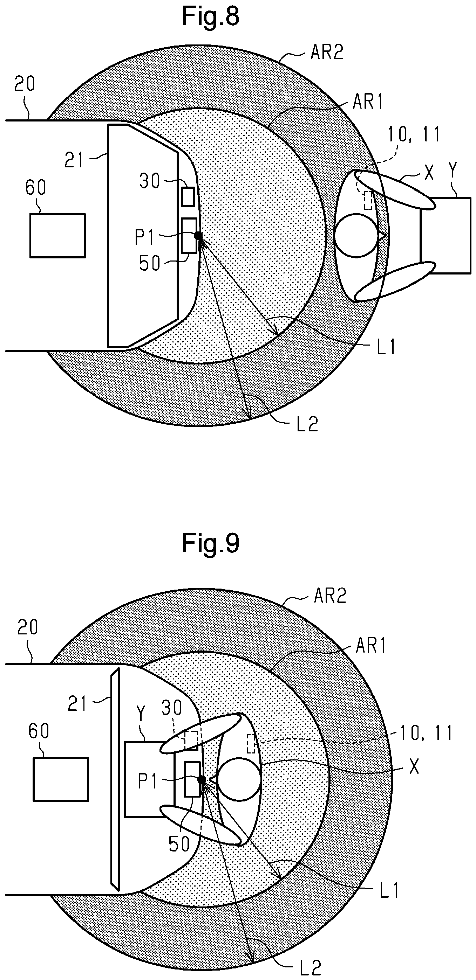

In step S15, the execution device 61 determines whether the vehicle key 11 is located in a predetermined second area AR2. As shown in Fig. 8, the second area AR2, which is determined in advance through experiments and simulations, is an area within a range in which the distance from the reference point P1, which is the same as that of the first area AR1, is greater than or equal to the predetermined first specified distance L1 and less than a predetermined second specified distance L2. The second specified distance L2 is set to, for example, the distance at which the strength of the BLE signal becomes the lower detection limit value. The second area AR2 is located at the outer side of the first area AR1.

The execution device 61 compares the key position KP, which is acquired by the controller 60 in step S13, with the second area AR2, and determines that the vehicle key 11 is located in the second area AR2 when the key position KP is included in the second area AR2.

As shown in Fig. 2, when the execution device 61 determines that the vehicle key 11 is not located in the second area AR2 (S15: NO), the execution device 61 proceeds to step S13. When the execution device 61 determines that the vehicle key 11 is located in the second area AR2 (S15: YES), the execution device 61 proceeds to step S16.

In step S16, the execution device 61 initiates the first control mode MD1 to start closing the door 21. That is, the execution condition of the first control mode MD1 is that the vehicle key 11 is located in the second area AR2. The contents of the processing performed in the first control mode MD1 will be described in detail later. After starting closing the door 21 in the first control mode MD1, the execution device 61 proceeds to step S17.

In step S17, the execution device 61 determines whether a predetermined interrupt condition CC is satisfied. The interrupt condition CC is at least one of the next three conditions. A condition in which the controller 60 acquires the interrupt request CR, a condition in which the controller 60 acquires information indicating detection of a trapped object, and a condition in which the controller 60 determines that the key position KP has been detected in the first area AR1. The execution device 61 determines whether the interrupt condition CC is satisfied during a predetermined period from when step S17 is started.

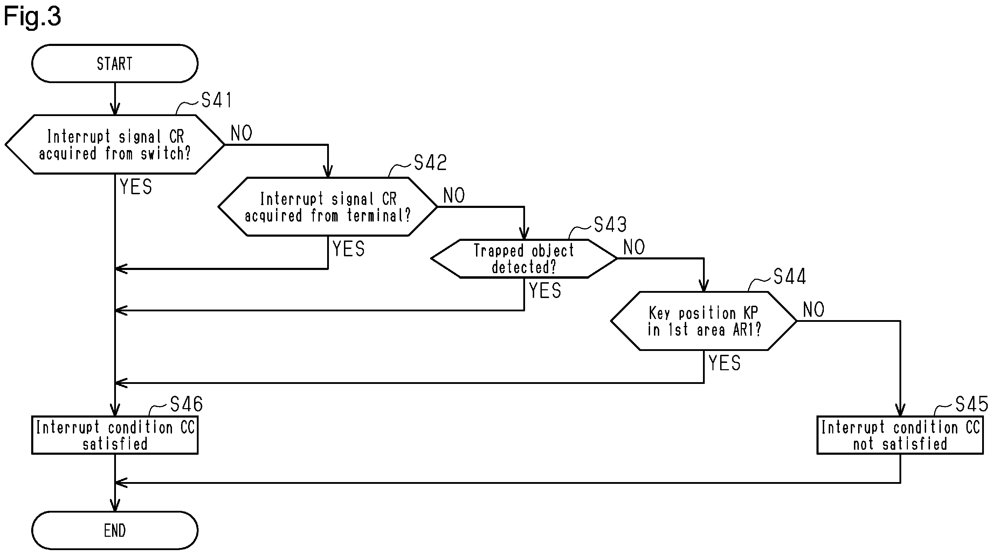

Fig. 3 shows the details of step S17. The execution device 61 first performs step S41. In step S41, the execution device 61 determines whether the controller 60 has acquired the interrupt request CR from the switch 30. When the controller 60 has not acquired the interrupt request CR from the switch 30 (S41: NO), the execution device 61 proceeds to step S42.

In step S42, the execution device 61 determines whether the interrupt request CR transmitted from the portable terminal 10 has been acquired. More specifically, when the controller 60 acquires the interrupt request CR from the communication device 40, the execution device 61 determines that the interrupt request CR transmitted from the portable terminal 10 has been acquired. When the execution device 61 has not acquired the interrupt request CR transmitted from the portable terminal 10 (S42: NO), the execution device 61 proceeds to step S43.

In step S43, the execution device 61 determines whether the entrapment sensing device 80 has detected a trapped object. When acquiring the detection signal SA, the execution device 61 determines that the entrapment sensing device 80 has detected a trapped object. When the entrapment sensing device 80 has not detected a trapped object (S43: NO), the execution device 61 proceeds to step S44.

In step S44, the execution device 61 determines whether the key position KP is in the first area AR1. When the execution device 61 acquires information indicating the key position KP after step S17 is started, the execution device 61 determines whether the acquired key position KP is in the first area AR1. When the key position KP is not in the first area AR1 (S44: NO), the execution device 61 proceeds to step S45.

In step S45, the execution device 61 determines that the interrupt condition CC is not satisfied. Consequently, the execution device 61 ends step S17, which is shown in Fig. 2.

As shown in Fig. 3, when the controller 60 acquires the interrupt request CR from the switch 30 (S41: YES), the execution device 61 proceeds to step S46. When the execution device 61 acquires the interrupt request CR transmitted from the portable terminal 10 (S42: YES), the execution device 61 proceeds to step S46. When the entrapment sensing device 80 detects a trapped object (S43: YES), the execution device 61 proceeds to step S46. When the key position KP is in the first area AR1 (S44: YES), the execution device 61 proceeds to step S46. In step S46, the execution device 61 determines that the interrupt condition CC is satisfied. Consequently, the execution device 61 ends step S17, which is shown in Fig. 2.

As shown in Fig. 2, when the execution device 61 determines that the interrupt condition CC is satisfied (S17: YES), the execution device 61 proceeds to step S18. In step S18, the execution device 61 interrupt the first control mode MD1, which includes closing the door 21.

In detail, the execution device 61 first outputs a request to the door opening-closing device 70 to stop closing the door 21. When acquiring the request, the control unit 72 of the door opening-closing device 70 switches the rotation direction of the motor 71 to the first direction so that the door 21 opens. Then, the execution device 61 outputs a request to the entrapment sensing device 80 to interrupt the entrapment detection control. When acquiring the request, the control unit 82 of the entrapment sensing device 80 interrupts the entrapment detection control. Further, the execution device 61 outputs a request to the sound output device 90 to interrupt the output of sound. When acquiring the request, the control unit 92 of the sound output device 90 interrupts the output of sound. Then, the execution device 61 proceeds to step S19.

In step S19, the execution device 61 cancels the deferred closure state set as the control state of the door 21. When cancelling the deferred closure state, the execution device 61 clears the non-detection counter NC. Then, the execution device 61 ends the series of processes in the present cycle.

When the execution device 61 determines that the interrupt condition CC is not satisfied (S17: NO), the execution device 61 proceeds to step S21. In step S21, the execution device 61 determines whether the closing of door 21 has been completed.

More specifically, if the time elapsed from when the door 21 started closing without an affirmative determination given in step S17 becomes greater than or equal to a predetermined period, the execution device 61 determines that the closing of the door 21 has been completed. When the execution device 61 has not completed closing the door 21 (S21: NO), the execution device 61 returns to step S17. When the execution device 61 has completed closing the door 21 (S21: YES), the execution device 61 proceeds to step S19. The execution device 61 then performs step S19 and ends the series of processes in the present cycle.

When determining that the key position KP has not been detected (S13: NO), the execution device 61 proceeds to step S31. In step S31, the execution device 61 increments the non-detection counter NC. More specifically, the execution device 61 increases, by one, the value stored in the non-detection counter NC indicating the number of consecutive instances in which there is no determination of detection of the key position KP. Then, the execution device 61 proceeds to step S32.

In step S32, the execution device 61 determines whether the value of the non-detection counter NC is greater than or equal to a predetermined specified value. The specified value is set to be greater than the quotient obtained by dividing a predetermined specified period by a wait time. The specified period is set in advance through experiments and simulations as a period allowing for determination that the probability of the vehicle key 11 being sufficiently separated from the door 21 is high when, for example, a state in which there is no determination of detection of the key position KP continues. That is, the specified period is the period during which the non-detection counter NC increases from zero to the specified value. If the non-detection counter NC, which increases from zero, reaches the specified value, the execution device 61 determines that there was no detection of the key position KP during the specified period. The specified period is measured from at least when the control state of the door 21 is set to the deferred closure state. When the value of the non-detection counter NC is less than the specified value (S32: NO), the execution device 61 returns to step S13.

When the value of the non-detection counter NC is greater than or equal to the specified value (S32: YES), the execution device 61 proceeds to step S33. That is, when determined that there was no detection of the key position KP over the specified period, the execution device 61 proceeds to step S33.

In step S33, the execution device 61 initiates the second control mode MD2, which differs from the first control mode MD1, to start closing the door 21. The execution condition of the second control mode MD2 is that it is determined that there was no determination of the key position KP over the specified period. The contents of the processing performed in the second control mode MD2 will be described later. After starting closing the door 21 in the second control mode MD2, the execution device 61 proceeds to step S17. Thus, the execution device 61 determines whether the interrupt condition CC is satisfied in step S17 when the door 21 is closing in the first control mode MD1 and also when the door 21 is closing in the second control mode MD2.

### First Control Mode

The first control mode MD1, which is executed during step S16 of Fig. 2, will now be described in detail.

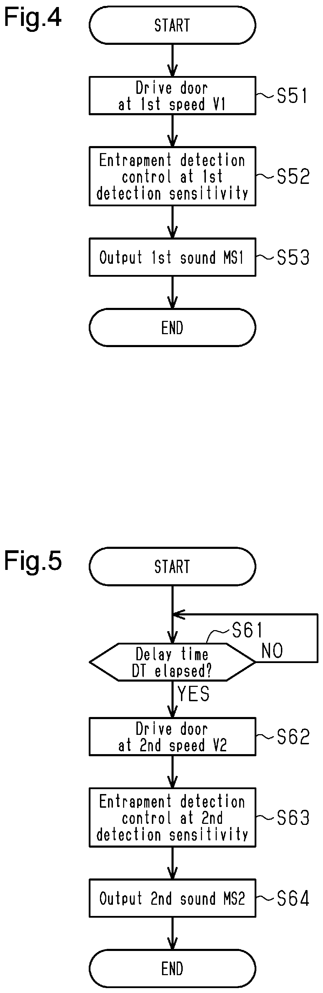

As shown in Fig. 4, when the execution device 61 starts step S16 of Fig. 2, the execution device 61 first performs step S51. In step S51, the execution device 61 starts closing the door 21 at a predetermined first speed V1. More specifically, the execution device 61 outputs a first closure signal SC1 to the door opening-closing device 70 to close the door 21 at the first speed V1. The control unit 72 of the door opening-closing device 70, which acquires the first closure signal SC1, drives the motor 71 and starts closing the door 21 at the first speed V1. Then, the execution device 61 proceeds to step S52.

In step S52, the execution device 61 starts the entrapment detection control with the entrapment sensing device 80 at a predetermined first detection sensitivity DS1. More specifically, the execution device outputs, to the entrapment sensing device 80, a signal indicating a first load setting LS1 as the first detection sensitivity DS1 to set a predetermined first load as a threshold value. The signal indicating the first load setting LS1, which is acquired by the control unit 82 of the entrapment sensing device 80, compares the load detected by the sensor 81 with the first load, which is set as the threshold value. In this manner, the entrapment sensing device 80 starts the entrapment detection control at the first detection sensitivity DS1. The first load is, for example, a load that obtains the average sensitivity allowing for the detection of a trapped object and is set in advance through experiments and simulations. Then, the execution device 61 proceeds to step S53.

In step S53, the execution device 61 outputs a predetermined first sound MS1 from the sound output device 90. More specifically, the execution device 61 outputs a request to the sound output device 90 to output the first sound MS1. When acquiring the request, the control unit 92 of the sound output device 90 outputs the first sound MS1 from the speaker 91. Then, the execution device 61 ends the series of processes that starts closing the door 21 in the first control mode MD1.

In this manner, the execution device 61 starts closing the door 21 in the first control mode MD1. Thus, the first control mode MD1 includes closing the door 21, the entrapment detection control executed with the entrapment sensing device 80, and the output of sound from the sound output device 90 when the door 21 is closing.

### Second Control Mode

The second control mode MD2, which is executed during step S33 of Fig. 2, will now be described in detail.

As shown in Fig. 5, when the execution device 61 starts step S33 of Fig. 2, the execution device 61 first performs step S61. In step S61, the execution device 61 outputs a warning sound from the sound output device 90 and determines whether a predetermined delay period DT has elapsed from when step S33 started. The delay period DT is the time allowing a person to move away from the door 21 after hearing the warning sound and is determined in advance through experiments and simulations. The delay period DT is set to, for example, five seconds.

When the delay period DT has not elapsed (S61: NO), the execution device 61 repeats step S33. In this case, the execution device 61 continuously outputs the warning sound from the sound output device 90. When the delay period DT elapses (S61: YES), the execution device 61 stops outputting the warning sound and proceeds to step S62.

In step S62, the execution device 61 starts closing the door 21 at a predetermined second speed V2. The second speed V2 is set to be slower than the first speed V1. More specifically, the execution device 61 outputs a second closure signal SC2 to the door opening-closing device 70 to close the door 21 at the second speed V2. The control unit 72 of the door opening-closing device 70, which acquires the second closure signal SC2, drives the motor 71 and starts closing the door 21 at the second speed V2. Then, the execution device 61 proceeds to step S63.

In step S63, the execution device 61 starts the entrapment detection control with the entrapment sensing device 80 at a predetermined second detection sensitivity DS2. The second detection sensitivity DS2 is higher than the first detection sensitivity DS1. More specifically, the execution device 61 outputs, to the entrapment sensing device 80, a signal indicating a second load setting LS2 as the second detection sensitivity DS2 to set a second load, which is less than the first load, as a threshold value. The signal of the second load setting LS2, which is acquired by the control unit 82 of the entrapment sensing device 80, compares the load detected by the sensor 81 with the second load, which is set as the threshold value. In this manner, the entrapment sensing device 80 starts the entrapment detection control at the second detection sensitivity DS2. Then, the execution device 61 proceeds to step S64.

In step S64, the execution device 61 outputs a predetermined second sound MS2 from the sound output device 90. The second sound MS2 differs in type from the first sound MS1. For example, the second sound MS2 differs in pitch from the first sound MS1. The execution device 61 outputs a request to the sound output device 90 to output the second sound MS2. When acquiring the request, the control unit 92 of the sound output device 90 outputs the second sound MS2 from the speaker 91. Then, the execution device 61 ends the series of processes that starts closing the door 21 in the second control mode MD2.

In this manner, the execution device 61 starts closing the door 21 in the second control mode MD2. Thus, the second control mode MD2 includes closing the door 21, the entrapment detection control executed with the entrapment sensing device 80, and the output of sound from the sound output device 90 when the door 21 is closing.

The second control mode MD2 differs from the first control mode MD1 in the closing speed of the door 21, the detection sensitivity of the entrapment detection control, and the type of sound output when the door 21 closes. Further, the second control mode MD2 differs from the first control mode MD1 in that a warning sound is output before the door 21 starts closing.

The control system 22 is implemented by the controller 60, which executes the control program PR and has the functionality of a control unit, and the position detector 50, which executes the position detection control and has the functionality of a detector. The control system 22 executes a control method including detecting the key position KP, initiating the first control mode MD1 to close the door 21, and initiating the second control mode MD2 to close the door 21.

### Operation of Embodiment

The operation of the above embodiment under situations in which a user X opens the door 21 to remove an item Y from the vehicle 20 will now be described.

In a first situation, as shown in Fig. 6, the user X, who has the portable terminal 10, opens the door 21. Then, when the user X operates the switch 30, the controller 60 acquires the deferred closure request RR from the switch 30. As a result, the controller 60 starts execution of the control program PR.

For example, the user X has the portable terminal 10 in a chest pocket. When the user X operates the switch 30, the portable terminal 10 is located in the first area AR1. Thus, the signal strength SS acquired by the communication device 40 is greater than or equal to the predetermined strength. In this state, the position detector 50 is executing the position detection control. Upon detection of the key position KP by the position detector 50, the controller 60 acquires the key position KP from the position detector 50 and determines that the vehicle key 11 is located in the first area AR1. Accordingly, the controller 60 repeats steps S13 to S15 of Fig. 2. The door 21 is kept open in this situation.

As shown in Fig. 7, when the user X is removing the item Y, the portable terminal 10 is located in the first area AR1. As long as it is determined that the position detector 50 has detected the key position KP, the controller 60 repeats steps S13 to S15 shown in Fig. 2. The door 21 is also kept open in this situation.

As shown in Fig. 8, when the user X carrying the item Y moves to a position separated from the vehicle 20 by the first specified distance L1 or greater, the portable terminal 10 will be located in the second area AR2. If the key position KP is detected by the position detector 50, the controller 60 gives an affirmative determination in step S15 and then proceeds to step S16. This results in the execution of the first control mode MD1 that starts closing the door 21. Then, as long as the interrupt condition CC does not become satisfied, the door 21 continues to close until it becomes fully closed. This completes the closing action.

In a second situation, subsequent to the situation shown in Fig. 6 in which the control state of the door 21 is set to the deferred closure state, the user X removes the item Y as shown in Fig. 9. In Fig. 9, due to the size or shape of the item Y, the user X has the portable terminal 10 kept in, for example, a pocket at the back side of the body. In this case, the body of the user X is located between the antenna unit 51 and the portable terminal 10. Thus, the antenna unit 51 may not be able to receive the UWB signal from the portable terminal 10. As a result, the position detector 50 may not be able to detect the key position KP.

Under the situation in which the position detector 50 is not able detect the key position KP, as shown in Fig. 8, the user X removes the item Y and walks away from the vehicle 20. In this case, if there is no determination over the specified period that the key position KP has been detected, the controller 60 starts closing the door 21 in the second control mode MD2. Then, as long as the interrupt condition CC does not become satisfied, the door 21 continues to close until it becomes fully closed. This completes the closing action.

### Advantages of Embodiment

(1) In the above embodiment, the controller 60 starts closing the door 21 if it is determined that the position detector 50 has not detected the key position KP over a specified period. Thus, the door 21 will not be left open even if there is no determination that the key position KP has been detected.
   In the above embodiment, if the key position KP detected by the position detector 50 is in the second area AR2, the controller 60 initiates the first control mode MD1 and starts closing the door 21. If the key position KP is not detected by the position detector 50 over the specified period, the controller 60 initiates the second control mode MD2 and starts closing the door 21. The second control mode MD2 differs from the first control mode MD1. Thus, if the key position KP is not in the second area AR2, the user X does not have to worry that the door 21 will close in the same manner as when the key position KP is in the second area AR2.
(2) In the situation shown in Fig. 9, after setting the control state of the door 21 to the deferred closure state, if the user X stays by the vehicle 20 to remove the item Y and the specified period elapses, the controller 60 starts closing the door 21 in the second control mode MD2. The door 21 closes in the second control mode MD2 at the second speed V2, which is slower than the first speed V1 at which the door 21 closes in the first control mode MD1. This provides the user X with sufficient time for avoiding the door 21 or operating the switch 30 so that the interrupt request CR is output to the controller 60.
(3) If determined that there is no detection of the key position KP, the door 21 may start closing in a state in which an object, such as the user X or the item Y, is located at a position where the object may become trapped by the door 21. In the above embodiment, the second detection sensitivity DS2 in the second control mode MD2 is higher than the first detection sensitivity DS1 in the first control mode MD1. Thus, even if the object becomes trapped by the door 21, such entrapment will readily be detected because the detection sensitivity is set to the second detection sensitivity DS2, which is higher than the first detection sensitivity DS1. This provides the user X with a sense of safety.
(4) In the above embodiment, the type of the second sound MS2 when the door 21 closes in the second control mode MD2 differs from the type of the first sound MS1 when the door 21 closes in the first control mode MD1. This allows the user X to recognize that the door 21 is closing in the second control mode MD2, which differs from the first control mode MD1, without looking at the door 21.
(5) In the above embodiment, a warning sound is output before the door 21 starts closing in the second control mode MD2. This allows the user X to recognize that the door 21 will close in the second control mode MD2, which differs from the first control mode MD1, without looking at the door 21.
(6) In the above embodiment, when the switch 30 is operated, the controller 60 acquires the deferred closure request RR from the switch 30. The switch 30 is arranged in the vehicle 20. This improves operability for the user X.
(7) In the above embodiment, the controller 60 acquires the deferred closure request RR, which is received by the communication device 40 from the portable terminal 10, from the communication device 40. This allows the controller 60 to set the control state of the door 21 to the deferred closure state even when the user X is separated from a position where the switch 30 of the vehicle 20 can be directly operated.
(8) In the above embodiment, if the interrupt request CR is acquired when the door 21 is closing, the controller 60 stops closing the door 21. Thus, even if the user X sets the control state of the door 21 to the deferred closure state and the door 21 then starts to close, the closing action of the door 21 may be interrupted when the user X intends to do so.
(9) In the above embodiment, the controller 60 acquires the interrupt request CR from the switch 30. Thus, the user X can interrupt the closing action of the door 21 by operating the switch 30, which is also used to set the deferred closure state. This allows the user X to readily recognize where to operate.
(10) In the above embodiment, the controller 60 acquires the interrupt request CR, which is received by the communication device 40 from the portable terminal 10, from the communication device 40. This allows the user X to interrupt the closing action of the door 21 even when the user X cannot reach and directly operate the switch 30 of the vehicle 20.
(11) In the above embodiment, when determined that the key position KP is in the first area AR1 as the door 21 closes, the closing action of the door 21 is interrupted. When the door 21 is closing in the first control mode MD1 and the user X, who has the portable terminal 10, moves away from the vehicle 20 and then comes back, the vehicle 20 interrupts the closing action of the door 21. When the door 21 is closing in the second control mode MD2, after determining that there is no detection of the key position KP over the specified period, the user X, who has the portable terminal 10, may be within the first area AR1. In this case, if it is determined again that the key position KP has been detected and the detected key position KP is in the first area AR1, the vehicle 20 interrupts the closing action of the door 21.
(12) In the above embodiment, if the entrapment sensing device 80 detects a trapped object when the door 21 is closing, the controller 60 interrupts the closing action of the door 21. Thus, after an object is trapped, the door 21 will no longer continue to close.
(13) In the above embodiment, the vehicle key 11 is a digital key. This allows wireless communication to be performed between the position detector 50 and the portable terminal 10 to detect the key position KP. When a body, such as the user X, is located between the portable terminal 10 and the antenna unit 51, wireless communication is apt to being affected by the body. This may interfere with the detection of the key position KP, and the door 21 may not close if the vehicle 20 cannot detect the key position KP. In this regard, since the vehicle key 11 is a digital key, the significance of advantage (1) is further emphasized.

### Other Embodiments

The above embodiments may be modified as described below. The above embodiment and the modified examples described below may be combined as long as there is technical consistency.

### First Control Mode and Second Control Mode

In the above embodiment, in steps S51 and S62, the door 21 may be closed at the same speed. That is, the first speed V1 may be the same as the second speed V2.

In the above embodiment, in steps S52 and S63, the entrapment detection control may be executed with the same detection sensitivity. That is, the first detection sensitivity DS1 may be the same as the second detection sensitivity DS2. The controller 60 may perform only one of steps S52 and S63.

In the above embodiment, steps S53 and S64 may output the same sound. That is, the first sound MS1 may be of the same type as the second sound MS2. The type of the sound does not have to be pitch and may be melody, rhythm, or the like. The controller 60 may perform only one of steps S53 and S64.

In the above embodiment, the controller 60 does not have to perform step S61. The controller 60 may perform step S61 before step S51.

In the above embodiment, the feature that differs between steps S16 and S33 does not have to be the closing speed of the door 21, the detection sensitivity of the entrapment detection control, and the type of the sound output when the door 21 is closing. For example, the tail lamp of the vehicle 20 may be illuminated when the door 21 is closing in a manner that differs between step S16 and step S33. Further, for example, the process that starts closing the door 21 in the second control mode MD2 may include the transmission of a message to the portable terminal 10 indicating that the door 21 will be closed. In this case, the process that starts closing the door 21 in the first control mode MD1 does not have to include the transmission of such a message.

In the above embodiment, step S16 may differ from step S33 in at least some of the control contents.

In the above embodiment, the non-detection counter NC does not have to be used to determine whether the key position KP is not detected during the specified period. For example, when the execution device 61 gives a negative determination in step S13, after the specified period elapses, the execution device 61 may determine again whether the key position KP is detected. In this case, if the key position KP is not detected again, the execution device 61 determines that the key position KP was not detected over the specified period. Further, for example, when the execution device 61 gives a negative determination in step S13, instead of performing step S31, the execution device 61 may perform a process that uses a timer for measuring time. Then, instead of step S32, the execution device 61 may determine whether the time measured by the timer is greater than or equal to the specified period. In this case, the execution device 61 returns to step S13 if the time measured by the timer is less than the specified period, and the execution device 61 proceeds to step S33 if the time measured by the timer is greater than or equal to the specified period. The timer is not stopped or reset as long as it is determined that there is no detection of the key position KP.

### Interrupt Determination

The controller 60 does not have to perform step S41. The controller 60 does not have to perform step S42. The controller 60 does not have to perform step S43. The controller 60 does not have to perform step S44. The controller 60 may perform only at least one of steps S41 to S44 to determine whether the interrupt condition CC is satisfied.

The controller 60 does not have to perform steps S17 to S19 and S21. In other words, after the door 21 starts closing, the controller 60 does not have to interrupt the closing door 21.

### Terminal

The vehicle key 11 does not have to be a digital key. For example, the vehicle key 11 may be an electronic key configured to perform wireless communication with the vehicle 20.

The communication standard of the portable terminal 10 and the vehicle 20 is not limited to the standard used in the above embodiment. The communication standard may differ from BLE and UWB and be Wi-Fi (Registered Trademark), 4G, 5G, or the like.

### Switch

In the above embodiment, the same switch 30 is used to output the deferred closure request RR, the open request OR, the interrupt request CR, and the closing request to the controller 60. Instead, a different switch may be provided for each request. For example, the switch 30 may be configured to output only the deferred closure request RR.

In the above embodiment, the switch 30 may be omitted from the vehicle 20. In this case, the controller 60 may acquire the deferred closure request RR from the portable terminal 10 via the communication device 40, which acts as an acquisition unit or an acquisition device.

### Communication Device

In the above embodiment, the communication device 40 is configured to output a signal indicating the signal strength SS, the deferred closure request RR, the open request OR, the interrupt request CR, and the closing request to the controller 60. Instead, a different device may be provided to output each request. For example, a device that performs BLE communication outputs a signal indicating the signal strength SS to the controller 60, and a device that performs Wi-Fi communication may be used to output the other requests to the controller 60.

The communication device 40 does not have to acquire a signal indicating the signal strength SS. In this case, the position detector 50 may constantly perform the position detection control without relying on the signal strength SS.

In the above embodiment, the communication device 40 may be omitted from the vehicle 20. In this case, the controller 60 may acquire the deferred closure request RR from the switch 30, which acts as an acquisition unit or an acquisition device.

### Position Detector

The position detector 50 may perform the position detection control in a manner that differs from the above embodiment. For example, without using the test signal S3, the position detector 50 may calculate distance from the propagation time of only the test signal S2 transmitted to the portable terminal 10. The position detector 50 does not have to acquire angle and may detect only distance as the key position KP. Further, for example, the position detector 50 may use longitude and latitude to specify the detected key position KP.

When the key position KP is not acquired, the controller 60, the position detector 50 may output a signal indicating that the key position KP was not acquired.

The position detector 50 is exemplified as a detector. Instead, the detector may be incorporated in the controller 60. That is, the controller 60 and the position detector 50 may be integrated into the same device.

### Others

The door opening-closing device 70 is not limited to the configuration in the example of the above embodiment. For example, the door opening-closing device 70 may store information indicating the driving speed of the door 21 for each of the first control mode MD1 and the second control mode MD2. In this case, the control unit 72 may acquire a signal from the controller 60 indicating the first control mode MD1 or the second control mode MD2 and close the door 21 at the speed corresponding to the mode.

The entrapment sensing device 80 is not limited to the configuration in the example of the above embodiment. For example, the detection sensitivity is not limited to load. In this case, the sensor 81 may acquire the rotation speed of the motor 71, and the detection sensitivity may be a decreasing rate of the rotation speed. The controller 60 may determine whether an object is trapped. That is, the entrapment sensing unit may be incorporated in the controller 60.

The entrapment sensing device 80 may be omitted from the vehicle 20.

The sound output device 90 may be omitted from the vehicle 20.

The door 21 is not limited to the back door of the vehicle 20 and may be a rear door or the like. The door 21 may be a sliding door.

In the above embodiment, the controller 60 is provided with the execution device 61 that is processing circuitry including one or more processors that run computer programs (software) to execute various processes. However, the controller 60 may be provided with processing circuitry including one or more dedicated hardware circuits, such as application-specific integrated circuits (ASICs) that execute at least some of the processes. Alternatively, the controller 60 may be provided with processing circuitry including a combination of one or more processors and one or more dedicated hardware circuits. Each processor may include a CPU and memory such as a RAM and a ROM. The memory stores program codes or instructions configured to have the CPU execute processes. The memory, namely, a computer-readable medium, includes any available medium accessible by a general-purpose or special-purpose computer. The control unit 52 of the position detector 50, the control unit 72 of the door opening-closing device 70, the control unit 82 of the entrapment sensing device 80, and the control unit 92 of the sound output device 90 may each be provided with processing circuitry similar to that of the controller 60 described above.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A vehicle (20), comprising:
a position detector (50) configured to detect where a vehicle key (11) is located; and
a controller (60), wherein
the controller (60) is configured to initiate a first control mode (MD1) that includes closing a door (21) of the vehicle (20) if a deferred closure request (RR) for closing the door (21) is acquired and the vehicle key (11) is located a specified distance or greater away from the vehicle (20), and
the controller (60) is configured to initiate a second control mode (MD2) that differs from the first control mode (MD1) and includes closing the door (21) if the deferred closure request (RR) is acquired and the position detector (50) does not detect where the vehicle key (11) is located for a predetermined specified period.

2. The vehicle (20) according to claim 1, wherein the door (21) is closed at a slower speed in the second control mode (MD2) than in the first control mode (MD1).

3. The vehicle (20) according to claim 1 or 2, further comprising:
an entrapment sensing device (80) configured to detect an object trapped by the door (21) when the door (21) is closing, wherein
the first control mode (MD1) includes a control for detecting a trapped object with the entrapment sensing device (80),
the second control mode (MD2) includes a control for detecting a trapped object with the entrapment sensing device (80), and
a trapped object is detected with a higher detection sensitivity in the second control mode (MD2) than in the first control mode (MD1).

4. The vehicle (20) according to any one of claims 1 to 3, further comprising:
a sound output device (90) configured to output sound, wherein
the first control mode (MD1) includes outputting sound from the sound output device (90) when the door (21) is closing,
the second control mode (MD2) includes outputting sound from the sound output device (90) when the door (21) is closing, and
the sound output in the second control mode (MD2) differs in type from the sound output in the first control mode (MD1).

5. The vehicle (20) according to any one of claims 1 to 4, further comprising:
an acquisition device (30,40) configured to acquire the deferred closure request (RR) and output the deferred closure request (RR) to the controller (60),
wherein the controller (60) is configured to acquire the deferred closure request (RR) from the acquisition device (30,40).

6. The vehicle (20) according to claim 5, wherein the acquisition device (30,40) includes a switch (30) arranged in the vehicle (20) and configured to be operated when the door (21) is open to acquire the deferred closure request (RR) and output the deferred closure request (RR) to the controller (60).

7. The vehicle (20) according to claim 5, wherein the acquisition device (30,40) includes a communication device (40) configured to receive the deferred closure request (RR) from a terminal through wireless communication and output the received deferred closure request (RR) to the controller (60).

8. The vehicle (20) according to any one of claims 1 to 7, wherein the controller (60) is configured to interrupt a closing action of the door (21) if an interrupt request (CR) for interrupting the closing action of the door (21) is acquired when the door (21) is closing.

9. The vehicle (20) according to claim 8, further comprising:
an acquisition device configured to acquire and output the deferred closure request (RR) and the interrupt request (CR) to the controller (60),
wherein the controller (60) is configured to acquire the deferred closure request (RR) and the interrupt request (CR) from the acquisition device (30,40).

10. The vehicle (20) according to claim 9, wherein the acquisition device (30,40) includes a switch (30) arranged in the vehicle (20) and configured to be operated when the door (21) is closing to acquire the interrupt request (CR) and output the interrupt request (CR) to the controller (60).

11. The vehicle (20) according to claim 9, wherein the acquisition device (30,40) includes a communication device (40) configured to receive the deferred closure request (RR) and the interrupt request (CR) from a terminal through wireless communication and output the received requests to the controller (60).

12. The vehicle (20) according to any one of claims 1 to 11, wherein the controller (60) is configured to interrupt a closing action of the door (21) if the vehicle key (11) is located within a range of a distance from the vehicle (20) that is less than the specified distance when the door (21) is closing.

13. The vehicle (20) according to any one of claims 1 to 12, further comprising:
an entrapment sensing device (80) configured to detect an object trapped by the door (21) when the door (21) is closing,
wherein the controller (60) is configured to interrupt a closing action of the door (21) if the entrapment sensing device (80) detects a trapped object when the door (21) is closing.

14. The vehicle (20) according to any one of claims 1 to 13, wherein the vehicle key (11) includes a digital key.

15. A method for controlling a vehicle (20) executed by a control system (22), the method comprising:
detecting where a vehicle key (11) is located;
initiating a first control mode (MD1) that includes closing a door (21) of the vehicle (20) if a deferred closure request (RR) for closing the door (21) is acquired and the vehicle key (11) is located a specified distance or greater away from the vehicle (20); and
initiating a second control mode (MD2) that differs from the first control mode (MD1) and includes closing the door (21) if the deferred closure request (RR) is acquired and location of the vehicle key (11) is not detected for a predetermined specified period.
